# EUROPÄISCHE PATENTSCHRIFT

(11) **EP 4 308 842 B1**
(45) Veröffentlichungstag und Bekanntmachung des Hinweises auf die Patenterteilung: **01.10.2025**
(21) Anmeldenummer: 22711979.9
(22) Anmeldetag: 10.03.2022
(51) Int. Cl.: F16L 53/38, F16L 53/70, F16L 59/02

(54) **VORRICHTUNG ZUR TEMPERIERUNG VON FLUIDEN**
DEVICE FOR THE TEMPERATURE CONTROL OF FLUIDS
DISPOSITIF DE RÉGULATION DE LA TEMPÉRATURE DE FLUIDES

(30) Priorität: 15.03.2021 EP 21162653
(43) Veröffentlichungstag der Anmeldung: 24.01.2024
(73) Patentinhaber: BASF SE, 67056 Ludwigshafen am Rhein (DE)
(72) Erfinder: HECHLER, Claus, 67063 Ludwigshafen (DE)
(74) Vertreter: BASF IP Association
(86) Internationale Anmeldenummer: PCT/EP2022/056154
(87) Internationale Veröffentlichungsnummer: WO 2022/194662

(56) Entgegenhaltungen:
- CN-A- 111 486 301
- DE-A1- 102017 207 587
- US-A1- 2013 248 013

## Beschreibung

Die Erfindung betrifft eine Vorrichtung zur Temperierung von Fluiden, insbesondere zur Temperierung von Fluiden in einer Rohrleitung, einem Kanal mit beliebigem Querschnitt oder einem Behälter. Weiterhin betrifft die Erfindung ein Verfahren zur Temperierung von Fluiden unter Verwendung der Vorrichtung.

Derzeit werden zur Temperierung üblicherweise von einem Temperiermedium durchströmte Temperierleitungen eingesetzt, die beispielsweise den Rohrleitungen oder Kanälen, die das Medium führen, beigelegt sind, oder es werden insbesondere zur Verhinderung von Wärmeverlusten an die Umgebung, was zu einer unerwünschten oder unzulässigen Abkühlung des Mediums führen kann, gegebenenfalls auch elektrische Beheizungen eingesetzt, weil diese kostengünstig und flexibel installierbar sind. Solche Temperiereinrichtungen werden entweder direkt außen auf die Wandung der Rohrleitung, des Kanals oder des Behälters aufgebracht oder im Inneren der Rohrleitung, des Kanals oder des Behälters positioniert. Beim Einsatz von Temperiermedien ist es auch üblich, einen Doppelmantel vorzusehen, der die äußere Wandung der Rohrleitung, des Kanals oder des Behälters bildet.

Die DE102017207587A1 zeigt ein erdverlegtes Rohr zur Aufnahme von Fluiden oder Energieleitungen, wobei das Rohr eine Rohrwand aufweist, durch die mindestens ein Wandkanal parallel zur Längsrichtung des Rohres verläuft, wobei durch den Wandkanal ein fluides Medium übertragen wird.

Ganz besondere Anforderungen bestehen, wenn es sowohl eine zu hohe Temperatur als auch eine zu niedrige Temperatur des Mediums zu vermeiden gilt, vor allem, wenn es sich hierbei um sicherheitsrelevante Bedingungen handelt. Insbesondere dann, wenn temperaturempfindliche Fluide temperiert werden sollen, besteht gerade bei einer elektrischen Beheizung die Gefahr, dass es zu lokalen Überhitzung kommt, was im Grunde eine intrinsische Problematik dieser elektrischen Heizeinrichtungen darstellt, da diese immer auf der gesamten Länge oder abschnittsweise jeder Heizleiter mit einheitlicher Wärmeleistung je Länge Energie abgibt, der thermische Kontakt dieser Heizung zum mediumführenden Rohr oder Kanal aber in der realen technischen Ausführung immer eine gewisse Uneinheitlichkeit aufweist und darüber hinaus zur Temperaturregelung oder Begrenzung verwendete Temperaturmessstellen nur punktuell gesetzt werden können, wodurch die Gefahr besteht, dass eher leicht eine lokale Überhitzung auftreten kann und diese nicht erkannt und nicht ausgeregelt wird.

Der Einsatz von Temperiermedien, welche mit bekannten technischen Mitteln sowohl gegen zu hohe wie auch zu niedrige Temperatur durchgehend und sicher begrenzbar sind, hat wiederum den Nachteil, dass mit zunehmendem Strömungsweg - Verbindungsrohrleitungen z.B. in Produktionsanlagen von Chemikalien und insbesondere für die Verbindung der Produktionsanlagen mit deren Tanklagern oder Hafentanklagern bzw. Verbindungsrohrleitungen in diesen Tanklagern selbst oder in Hafentanklagern, in denen Chemikalien in größeren Mengen zwischengelagert werden, können ohne weiteres mehrere Hundert Meter oder gar einige Kilometer lang sein - bei einer Beheizung des Fluids die Temperatur des Temperiermediums abnimmt oder bei einer Kühlung die Temperatur des Temperiermediums zunimmt, je nach Umgebungsbedingungen, die sowohl über die Jahreszeiten aber auch schon im Wechsel von Tag und Nacht erheblich variieren können, so dass insbesondere in langen Rohrleitungen oder Kanälen eine ausreichende Wärmezufuhr oder Wärmeabfuhr über die gesamte Länge der Rohrleitung oder des Kanals nur schwer und nur mit sehr hohem technischen und damit auch (ggf. unwirtschaftlichem) Kostenaufwand oder nicht ausreichend sicher gewährleistet werden kann.

Nach dem Stand der Technik ist daher regelmäßig zusätzlicher organisatorischer Aufwand erforderlich, z.B. für regelmäßige und häufige Kontrollen mit deren Dokumentation, um eine angemessen gut funktionellen und sicheren Betrieb mit solchen Begleitbeheizungen zu erzielen.

Ein wesentliche zu beachtende Randbedingung besteht darin, dass nicht nur die regulären Betriebsbedingungen bei normalem Durchfluss auf der Produktseite - wenn durch den beträchtlichen Wärmeinhaltsstrom des Produktmediums die Beeinflussung dessen Temperatur durch äußere Bedingungen sehr begrenzt und daher niedrig ist - in Betracht gezogen werden, sondern auch solche, die im Grunde regulär und nicht selten, wenn nicht sogar regelmäßig ebenfalls eintreten und im Sinne der Wärmezufuhr und Wärmeabfuhr die anspruchsvolleren Bedingungen setzen und bei denen die Produktmediumleitungen gefüllt bleiben. Hierbei handelt es sich zum Beispiel um eine starke Verminderung oder Unterbrechung des Durchflusses mit in der Folge stagnierender Strömung des Produktmediums oder dessen Stillstands, was bei allein schon bei normalem Stopp z.B. von Förderpumpen bei Ende eines Transfervorgangs häufig eintritt, oder um automatisiertes Schließen oder Umschalten von Rohrleitungsarmaturen, was auch durch mechanische oder elektrische Störungen im System und der Peripherie der Rohrleitung auftreten kann.

Aufgabe der vorliegenden Erfindung ist es daher, eine Vorrichtung und ein Verfahren zur Temperierung von Fluiden bereitzustellen, die eine gleichmäßige Temperierung eines zu temperierenden Mediums ohne lokale Überhitzungen und gleichzeitig auch in langen Rohrleitungen oder Kanälen eine ausreichende Wärmezufuhr oder Wärmeabfuhr zur Einhaltung eines gewünschten und zulässigen Temperaturfensters bzw. die Vermeidung und Verhinderung von unerwünschtem oder unzulässigem Wärmeeintrag oder Wärmeabfuhr aus der Umgebung unter Berücksichtigung lokaler Umgebungsbedingungen und der Betriebsbedingungen über die gesamte Länge der Rohrleitung oder des Kanals zu angemessenen Kosten zu ermöglichen, wobei vorteilhafterweise auch der Rahmen unterschiedlicher klimatischer Zonen Berücksichtigung findet.

Gelöst wird die Aufgabe mit einer Vorrichtung zur Temperierung von Fluiden, umfassend eine Wandung, eine erste Dämmschicht, Mittel zur Temperierung, und eine zweite Dämmschicht, wobei die Wandung auf einer Seite mit dem zu temperierenden Fluid in Kontakt steht und die erste Dämmschicht auf der dem Fluid abgewandten Seite der Wandung aufgebracht ist und die Mittel zur Temperierung zwischen der ersten und der zweiten Dämmschicht angeordnet sind. Weiterhin wird die Aufgabe gelöst durch ein Verfahren zur Temperierung eines Fluids in einer Rohrleitung, einem Kanal mit beliebigen Querschnitt oder einem Behälter mit einer solchen Vorrichtung, wobei die Mittel zur Temperierung so angesteuert werden, dass nur dann eine Heizleistung aufgebracht wird, wenn die Umgebungstemperatur niedriger ist als eine zulässige minimale Temperatur des Fluids und/oder nur dann eine Kühlleistung, wenn die Umgebungstemperatur höher ist als eine zulässige maximale Temperatur des Fluids.

Der Begriff "Temperierung" im Sinne der vorliegenden Erfindung umfasst nicht nur das Heizen oder Kühlen des Fluids, sondern insbesondere auch das Halten der Temperatur des Fluids dadurch, dass verhindert wird, dass Wärme vom Fluid an die Umgebung abgegeben wird, was dazu führen kann, dass das Fluid einfrieren kann oder dass insbesondere bei hohen Außentemperaturen und hoher Sonneneinstrahlung das Fluid auf eine unzulässige Temperatur aufgeheizt wird. Dabei kann letzteres zu einem Wirksamkeitsverlust von Inhibitoren durch deren erhöhten reaktiven Verbrauch führen und ersteres einen Wirksamkeitsverlust der Inhibitoren, zum Beispiel durch Auskristallisieren derselben aufgrund sinkender Löslichkeit der Inhibitoren zumindest in einer Teilmenge des Fluids, bedeuten, oder eine unkontrollierte Reaktion, insbesondere Polymerisation, kann befördert werden oder das Fluid kann zersetzt werden.

Durch die Anordnung der Mittel zur Temperierung zwischen der ersten Dämmschicht und der zweiten Dämmschicht wird insbesondere bei Einsatz einer elektrischen Beheizung sichergestellt, dass keine lokalen Überhitzungen auftreten können, da durch die erste Dämmschicht die Wärme nicht direkt von der elektrischen Beheizung durch die in der Regel gut wärmeleitende Wandung der Rohrleitung, des Kanals oder des Behälters auf das Fluid übertragen wird.

Die Anordnung der Mittel zur Temperierung zwischen der ersten Dämmschicht und der zweiten Dämmschicht führt weiterhin dazu, dass ein kleinerer Teil der vom Mittel zur Temperierung abgegebenen oder aufgenommenen Wärme zur Temperierung des Fluids verwendet wird als bei einer Anordnung der Mittel zur Temperierung zwischen der Wandung und nur einer Dämmschicht. Hierdurch wird ebenfalls eine mögliche lokale Überhitzung oder Unterkühlung des Fluids verhindert. Insbesondere gelingt es hiermit bei Umgebungstemperaturen unterhalb oder weit unterhalb der gewünschten und zulässigen Fluidtemperatur die Aufheizung des Fluids innen zu vermeiden.

Zur Vereinfachung der Montage der Mittel zur Temperierung und um eine gleichmäßigere Verteilung der zugeführten oder abgeführten Wärme über den Umfang der Rohrleitung oder des Kanals zu erhalten, ist es weiterhin bevorzugt, wenn zwischen der ersten Dämmschicht und der zweiten Dämmschicht eine Zwischenschicht aus einem Metall mit einer Dicke im Bereich von 0,2 bis 1 mm, insbesondere mit einer Dicke im Bereich von 0.3 bis 0,6 mm, aufgenommen ist. Besonders bevorzugt ist das Metall, aus dem die Zwischenschicht gefertigt wird, Aluminium oder Kupfer, insbesondere Aluminium. Um die Zwischenschicht einfach montieren zu können, ist es weiterhin vorteilhaft, wenn diese in zwei Halbschalen aufweist, die um die erste Dämmschicht montiert wird.

Das zu temperierende Fluid kann jedes fließfähige Fluid sein, zum Beispiel ein fluidisierter Feststoff, insbesondere fluidisiertes Pulver oder Granulat, eine Flüssigkeit oder ein Gas oder eine beliebige Mischung daraus. Besonders bevorzugt ist das zu temperierende Fluid eine Flüssigkeit und insbesondere flüssige Acrylsäure oder Methacrylsäure. In der Regel enthält die flüssige Acrylsäure oder Methacrylsäure einen Inhibitor, um eine Polymerisation zu verhindern. Als Inhibitoren werden zum Beispiel gelöster Sauerstoff, gelöster Sauerstoff zusammen mit Hydrochinonmonomethylether oder gelöstes Phenothiazin eingesetzt. Wenn als Inhibitor Hydrochinonmonomethylether eingesetzt wird, so wird dieses vorzugsweise mit einer Konzentration im Bereich von 10 bis 300 ppm eingesetzt. Wenn die Acrylsäure oder Methacrylsäure nicht für längere Zeit gelagert wird, sondern beispielsweise durch eine geeignete Rohrleitung von der Produktion direkt einer Weiterverabeitung zugeführt wird und höchstens zwischengepuffert wird, ist es ausreichend, wenn der Hydrochinonmonomethylether mit einer Konzentration im Bereich von 30 bis 80 ppm eingesetzt wird. Dies ermöglicht die direkte Weiterverarbeitung ohne zunächst den Inhibitor durch geeignete, dem Fachmann bekannte Verfahren aus der Acrylsäure oder Methacrylsäure zu entfernen. Wenn jedoch beabsichtigt ist, die Acrylsäure oder Methacrylsäure längere Zeit zu lagern, zum Beispiel, um diese zu verkaufen oder zu verfrachten, beispielsweise für einen Transport per Schiff, Eisenbahn oder Lastwagen, liegt er Anteil an Hydrochinonmonomethylether vorzugsweise im Bereich von 150 bis 250 ppm, beispielsweise 200 ppm. Phenothiazin als Inhibitor wird üblicherweise mit einer Konzentration im Bereich von 5 bis 300 ppm, in der Regel bis maximal 100 ppm, eingesetzt.

Die zulässige minimale Temperatur des Fluids ist zum Beispiel die Erstarrungstemperatur. Ein Abkühlen des Fluids unter die zulässige minimale Temperatur würde dann dazu führen, dass das Fluid erstarrt und damit zum Beispiel eine Rohrleitung oder einen Kanal blockiert. Wenn sich das Fluid in einem Behälter befindet, führt ein Erstarren auch nur eines Teils des Fluids dazu, dass dieses einen Auslass aus dem Behälter blockieren kann, so dass das Fluid nicht mehr entnommen werden kann oder auch, dass der erstarrte Teil im Behälter verbleibt und damit nicht mehr zugänglich ist. Die zulässige maximale Temperatur ist zum Beispiel die Zersetzungstemperatur des Fluids oder, wenn das Fluid dazu neigt, bei bestimmten Temperaturen zu polymerisieren. Insbesondere bei einer Vielzahl ethylenisch ungesättigter Substanzen, zu denen (Meth)-Acrylmonomere zählen, aber auch z.B. bei Styrol und Vinylformamid sind Temperaturschwellen bekannt und definiert, welche nicht überschritten werden dürfen, um die Verminderung und/oder den Verlust der Wirksamkeit vorhandener Inhibitoren (wie Hydrochinonmonomethylether und im Fluid gelöster Sauerstoff) effektiv zu verhindern oder gar den direkten Onset chemischer Reaktion (in der Regel radikalische Polymerisation).

Eine chemische Reaktion, sei es Oligomerbildung, Polymerisation oder gar Zersetzung des Fluids soll oder muss in der Regel verhindert werden, da dies zu nicht kontrolliertem Wärmeeintrag mit möglicher Gasbildung, Druckerhöhung, eventuell Leckage oder Zerplatzen der Rohrleitung oder des Kanals führen kann, ist es notwendig, die Temperatur unterhalb definierter Schwellen zu halten, wobei es für eine Regelung der Heizleistung oder der Kühlleistung sowohl bei der zulässigen minimalen Temperatur als auch bei der zulässigen maximalen Temperatur sinnvoll sein kann, einen Sicherheitsbereich vorzusehen. So ist die zulässige minimale Temperatur vorzugsweise eine Temperatur, die 0 bis 5 K oberhalb der Erstarrungstemperatur liegt, und die zulässige maximale Temperatur eine Temperatur, die 0,5 bis 5 K unterhalb der Zersetzungstemperatur beziehungsweise der Starttemperatur der Polymerisation liegt. Als Polymerisationsstarttemperatur wird hierbei die Temperatur bezeichnet, bei der mindestens eine Komponente des Fluids beginnt zu polymerisieren, wobei die Polymerisationsstarttemperatur auch davon abhängen kann, ob ein Inhibitor enthalten ist. Wenn die erste Komponente des Fluids bei Einsatz eines Inhibitors erst bei einer höheren Temperatur beginnt zu polymerisieren als ohne Einsatz des Inhibitors wird im Rahmen der vorliegenden Erfindung als Polymerisationsstarttemperatur nicht die Temperatur verstanden, bei der die Komponente grundsätzlich beginnt zu polymerisieren, sondern die Temperatur, bei der die Komponente trotz des Einsatzes des Inhibitors beginnt zu polymerisieren. Diese liegt im Allgemeinen höher als ohne den Einsatz des Inhibitors.

Die Wandung, die auf einer Seite in Kontakt mit dem zu temperierenden Fluid steht und auf der auf der dem Fluid abgewandten Seite die Dämmschicht aufgebracht ist, ist vorzugsweise eine Wandung einer von dem Fluid durchströmten Rohrleitung oder eines von dem Fluid durchströmten Kanals mit einer beliebigen Querschnittsform oder eine Wandung eines das Fluid enthaltenden Behälters. Besonders bevorzugt wird die Vorrichtung zur Temperierung von Fluiden an einer Rohrleitung oder einem Kanal mit beliebiger Querschnittsform eingesetzt, so dass die Wandung insbesondere eine Wandung einer Rohrleitung oder eines Kanals mit einer beliebigen Querschnittsform ist.

Im Sinne der vorliegenden Erfindung wird unter Rohrleitung eine fluidführende Leitung mit einem runden Querschnitt verstanden, wobei die Rohrleitung starr oder flexibel sein kann. Ein Kanal mit beliebiger Querschnittsform kann jeder Kanal sein, der vollständig geschlossen ist. Die Querschnittsform des Kanals kann dabei jede beliebige Form aufweisen, zum Beispiel in Form eines Polygons mit mindestens 3 Ecken, beispielsweise in Form eines Dreiecks, eines Rechtecks oder Quadrats, eines Fünfecks, eines Sechsecks oder eines Achtecks, oder auch in Form eines Ovals oder mit mindestens einer gebogenen Wand und mindestens einer ebenen Wand oder auch mit mindestens zwei gebogenen Wänden, die unterschiedliche Radien aufweisen können oder auch den gleichen Radius aufweisen und an der Verbindungsstelle der Wände einen Winkel. Ganz besonders bevorzugt ist die Wandung die Wandung einer Rohrleitung oder eines Kanals mit einem ovalen oder viereckigen Querschnitt.

Um ein Überhitzen oder Unterkühlen des Fluids zu verhindern ist es bevorzugt, wenn die Mittel zur Temperierung mit einer vorgegebenen Heizleistung oder Kühlleistung betrieben werden können. Dies erlaubt es, eine solche Wärmemenge zuzuführen oder abzuführen, dass die Temperatur des Fluids in einem vorgegebenen Bereich gehalten werden kann. Zur Regelung der Heizleistung oder Kühlleistung ist es weiterhin vorteilhaft, wenn die Temperatur des Fluids zumindest am Austritt aus der Vorrichtung, die beheizt oder gekühlt wird, gemessen wird. Eine genauere Regelung der zuzuführenden oder abzuführenden Wärme ist möglich, wenn die Temperatur an mehreren Stellen gemessen wird und abhängig von der Temperatur des Fluids Wärme zugeführt oder abgeführt wird.

Zur Zufuhr oder Abfuhr der Wärme können die Mittel zur Temperierung so gestaltet sein, dass jeweils nur ein Abschnitt der Wandung mit den Mitteln zur Temperierung temperiert werden kann. Dies erlaubt es, gezielt an den entsprechenden Abschnitten die notwendige Wärme zuzuführen oder abzuführen. In diesem Fall ist es für die Regelung der Wärmezufuhr und/oder Wärmeabfuhr auch erforderlich, die Temperatur jeweils am Eintritt und am Austritt in einen Abschnitt zu erfassen und anhand der Temperaturen die notwendige Wärmemenge für die Beheizung oder Kühlung zuzuführen oder abzuführen.

Abhängig davon, ob eine zulässige maximale Temperatur nicht überschritten werden soll oder eine zulässige minimale Temperatur nicht unterschritten werden soll, umfassen die Mittel zur Temperierung eine Kühleinrichtung, mit der das Fluid gekühlt werden kann oder eine Beheizung, mit der das Fluid beheizt werden kann. Wenn sowohl eine minimale Temperatur nicht unterschritten und eine maximale Temperatur nicht überschritten werden soll, umfassen die Mittel zur Temperierung vorzugsweise sowohl eine Beheizung als auch eine Kühleinrichtung.

Als Beheizung kann dabei jede dem Fachmann bekannte Beheizung eingesetzt werden, zum Beispiel eine Beheizung mit einer von einem Heizmedium durchströmten Heizleitung oder eine elektrische Beheizung. Entsprechend kann auch jede, dem Fachmann bekannte Kühleinrichtung wie eine Kühlung durch mit einem Kühlmedium durchströmte Kühlleitung oder auch eine elektrische Kühlung, beispielsweise mit Peltier-Elementen, eingesetzt werden. Bei einer Temperierung mit einem Heizmedium oder einem Kühlmedium ist es bevorzugt, wenn das Heizmedium oder das Kühlmedium mit einer vorgegebenen Temperatur zugeführt werden. Die Einstellung der Heizleistung oder Kühlleistung kann dann mit der Durchflussmenge des Heizmediums oder Kühlmediums eingestellt werden. Eine Erhöhung der Durchflussmenge bewirkt, dass mehr Wärme zugeführt oder entsprechend bei Kühlung mehr Wärme abgeführt werden kann. Entsprechend führt eine Verringerung der Durchflussmenge zu einer Reduktion der zugeführten Wärme beziehungsweise der abgeführten Wärme. Die Veränderung der Durchflussmenge erlaubt dabei eine schnellere Reaktion auf Änderungen der Umgebungsbedingungen oder der Temperatur des durch die Rohrleitung oder den Kanal strömenden Fluids als eine Änderung der Zulauftemperatur des Heizmediums oder des Kühlmediums.

Da bei einer Temperierung mit einem Heiz- oder Kühlmedium, zum Beispiel Dampf, Öl oder einem beliebigen anderen flüssigen Heizmedium oder einem flüssigen Kältemittel auch an lokalen Hotspots bei der Verbindung von Heizleitungen oder Kühlleitungen, die von dem Heizmedium oder Kühlmedium durchströmt werden, mit der Wandung keine Temperaturen auftreten können, die höher liegen als die Temperatur des Heizmediums oder niedriger als die Temperatur des Kühlmediums, eignet sich die erfindungsgemäße Vorrichtung insbesondere für eine Temperierung eines Fluids mit Mitteln zur Temperierung, die eine elektrische Beheizung umfassen. Vorteil einer solchen elektrischen Beheizung ist, dass eine definierte Heizleistung zugeführt werden kann, wobei typischerweise bzw. in der Regel die Heizleistung über die gesamte Länge der elektrischen Beheizung je Längeneinheit gleich groß ist. Ein weiterer Vorteil der elektrischen Beheizung ist, dass die Heizleistung über die gesamte zu temperierende Fläche konstant ist, wohingegen bei einem flüssigen oder gasförmigen Temperiermedium die Temperatur über die Strömungslänge des Temperiermediums abnimmt, wenn mit dem Temperiermedium geheizt wird, oder zunimmt, wenn mit dem Temperiermedium gekühlt wird. Dies führt dazu, dass die größte Wärmemenge an der Position übertragen werden kann, an der das Temperiermedium zuerst an das zu temperierenden Fluid Wärme übertragen kann oder Wärme vom zu temperierenden Fluid aufnehmen kann. Insbesondere bei sehr langen Rohrleitungen oder Kanälen kann dies dazu führen, dass die vom Temperiermedium zu übertragende Wärme nicht über die gesamte Länge der Rohrleitung oder des Kanals ausreichend ist, zu verhindern, dass abhängig von der Umgebungstemperatur eine maximale Temperatur überschritten oder eine minimale Temperatur unterschritten wird. Dieser Mangel kann durchaus in gewissem Maß gemildert werden, indem Teilströme des Mediums separat in Strömungsrichtung geführt werden und an weiter stromab gelegenen Positionen eingespeist werden, was allerdings nur eine begrenzt verbesserte, stufige Charakteristik herbeiführt.

Insbesondere für temperaturempfindliche Fluide ist es daher besonders bevorzugt, wenn die Mittel zur Temperierung eine elektrische Beheizung umfassen. Wenn eine Kühlung des Fluids erforderlich ist, ist es weiterhin vorteilhaft, anstelle eines flüssigen oder gasförmigen Kühlmediums auch eine elektrische Kühlung, beispielsweise mit Peltier-Elementen vorzusehen. Bei Einsatz einer elektrischen Beheizung in Form von Heizleitern ist es weiterhin bevorzugt, wenn eine gerade Anzahl an Heizleitern vorgesehen ist. Dies hat den Vorteil, dass die elektrischen Anschlüsse der Heizleiter an einem Ende erfolgen können, so dass hierdurch die Montage und insbesondere der elektrische Anschluss der Heizleiter vereinfacht wird. Um den elektrischen Anschluss an einem Ende zu ermöglichen, werden dabei jeweils zwei Heizleiter, die mit Gleichstrom oder Wechselstrom betrieben werden können, an dem dem elektrischen Anschluss entgegengesetzten Ende miteinander elektrisch verbunden.

Insbesondere, wenn zur Regelung der Temperatur des Fluids in der Regel geheizt werden muss und nur in Ausnahmefällen, zum Beispiel an sehr heißen Sommertagen, gekühlt wird, ist es auch möglich, zum Beispiel eine elektrische Beheizung vorzusehen und eine Kühlleitung, die von einem Kühlmedium durchströmt werden kann und diese nur dann mit dem Kühlmedium zu durchströmen, wenn eine Kühlung erforderlich ist. Selbstverständlich ist es alternativ auch möglich, sowohl eine elektrische Beheizung und eine elektrische Kühlung vorzusehen, wenn die Mittel zur Temperierung sowohl eine Kühlung als auch eine Beheizung umfassen sollen.

Wenn die Vorrichtung zur Temperierung für ein Fluid eingesetzt wird, das nicht überhitzt werden kann oder die zulässige maximale Temperatur des Fluids oberhalb der üblichen maximalen Umgebungstemperatur liegt, ist es nicht notwendig, eine zusätzliche Kühlung vorzusehen. In diesem Fall umfassen die Mittel zur Temperierung nur Mittel zur Beheizung und insbesondere eine elektrische Beheizung.

Es gelingt erfindungsgemäß jedoch auch für eine relevante Anzahl von Anwendungsfällen an Fluiden, welche nicht überhitzt werden dürfen - es seien hier im speziellen Acrylsäure und Meth-Acrylsäure genannt - durch eine erfindungsgemäße Gestaltung und Dimensionierung von Dämmung und elektrischer Beheizung ohne jegliche Kühlvorrichtung die vorteilhafte, sichere und wunschgemäße Einhaltung des zulässigen Temperaturfensters des Mediums dauerhaft zu erreichen.

Insbesondere wenn die Wandung eine Wandung eines Kanals oder einer Rohrleitung ist, ist es bevorzugt, wenn die elektrische Beheizung mindestens einen Heizleiter umfasst, der parallel zur Strömungsrichtung des Fluids im Kanals oder in der Rohrleitung verläuft oder der um den Kanal oder die Rohrleitung gewickelt ist. Die Anzahl der Heizleiter ist dabei auch abhängig von der zuzuführenden Heizleistung. Insbesondere, wenn eine große Heizleistung zugeführt werden muss, um die gewünschte Temperatur des Fluids zu erhalten, ist es vorteilhaft, wenn mehrere, parallele Heizleiter eingesetzt werden, da in diesem Fall die Gesamtheizleistung auf die einzelnen Heizleiter verteilt wird. Dies führt weiterhin dazu, dass bei gleicher Heizleistung mit zunehmender Anzahl an Heizleitern die einzelnen Heizleiter eine niedrigere Temperatur aufweisen können und damit für eine niedrigere spezifische Heizleistung dimensioniert werden können.

Insbesondere bei parallel zur Strömungsrichtung verlaufenden Heizleitern findet die Übertragung der größten Wärmemenge über die kürzeste Strecke zwischen Heizleiter und Wandung statt. Dies kann dazu führen, dass das Fluid in der Rohrleitung nicht gleichmäßig erwärmt wird. Für eine gleichmäßige Temperierung des Fluids in der Rohrleitung oder dem Kanal ist es daher insbesondere bei Einsatz nur weniger Heizleiter, zum Beispiel bei Einsatz von drei oder weniger Heizleitern, und insbesondere bei Einsatz von nur einem Heizleiter bevorzugt, wenn der Heizleiter oder die Heizleiter um die Rohrleitung oder den Kanal gewickelt sind. In diesem Fall wird gleichmäßig von allen Seiten der Rohrleitung oder des Kanals Wärme zugeführt. Alternativ kann die gleichmäßige Temperierung auch durch Verwendung der Zwischenschicht aus einem gut wärmeleitenden Material, insbesondere aus Aluminium oder Kupfer, erreicht werden

Besonders bevorzugt wird die mit der elektrischen Beheizung zugeführte Heizleistung so eingestellt, dass die die Mittel zur Temperierung die gleiche Temperatur aufweisen wie das zu temperierende Fluid. Hierdurch wird die Temperatur des zu temperierenden Fluids konstant gehalten und es erfolgt keine Abkühlung oder Erwärmung, so dass auch lokale Überhitzungen oder Unterkühlungen verhindert werden können. Um die Mittel zur Temperierung so betreiben zu können, dass die Temperatur der Mittel zur Temperierung die gleiche ist wie die des zu temperierenden Fluids ist es weiterhin besonders vorteilhaft, wenn die Temperatur der Mittel zur Temperierung gemessen wird. Insbesondere, wenn die Mittel zur Temperierung eine große Fläche umfassen oder eine lange Rohrleitung oder ein langer Kanal temperiert werden soll, ist es weiterhin vorteilhaft, wenn die Temperatur der Mittel zur Temperierung an mehreren Stellen erfasst wird.

Des Weiteren werden bevorzugt für die Temperierung relevante Umgebungstemperaturbedingungen, wie z.B. eine repräsentative, lokale Temperatur, welche auch den Einfluss der Wärmeabfuhr durch Strahlung insbesondere bei klarer Witterung und 'Sicht' der Mediumleitung in Richtung Weltraum insbesondere bei Nacht berücksichtigt, aber auch die direkte Sonneneinstrahlung tagsüber in die Konzeption einbezogen. Dies spielt insbesondere dann eine Rolle, wenn tagsüber eine hohe Sonneneinstrahlung bei gleichzeitig hoher Umgebungstemperatur vorherrscht und nachts eine starke Abkühlung erfolgt.

Zur Erfassung der Temperatur des Fluids und der Temperatur der Mittel zur Temperierung können alle, dem Fachmann bekannten Mittel zur Temperaturerfassung eingesetzt werden. Geeignete Mittel zur Temperaturerfassung sind zum Beispiel Thermometer oder Temperatursensoren, beispielsweise Widerstandstemperatursensoren wie Thermoelemente oder Temperatursensoren auf Basis von Nickel oder Platin, beispielsweise PT100-Temperatursensoren, oder Infrarot-Temperatursensoren.

Als Material für die erste Dämmschicht und die zweite Dämmschicht kann jedes für eine Dämmung geeignete Material eingesetzt werden. Besonders bevorzugt als Material für die erste Dämmschicht und die zweite Dämmschicht sind Schaumglas oder Fasermaterialien wie Mineralfasern, Glasfasern, Keramikfasern, beispielsweise in Form von Mineralwolle. Bevorzugt werden Dämmmaterialien eingesetzt, die in Bezug auf chemische Verträglichkeit aber auch Porosität geeignet und zugelassen sind, um im Fall von Fluidleckagen eine Minimierung von Risiken zu erzielen, und die keine Brandlast darstellen und zudem verhindern, dass von außen Feuchtigkeit eindringen kann. Besonders bevorzugt wird für die erste Dämmschicht daher Schaumglas verwendet. Es ist möglich, dass als Material für die erste Dämmschicht und die zweite Dämmschicht unterschiedliche Materialien oder das gleiche Material eingesetzt werden. Bevorzugt ist hierbei, für die erste Dämmschicht und die zweite Dämmschicht das gleiche Material, insbesondere Schaumglas, einzusetzen, wodurch vermieden wird, dass im Fall einer unerwünschten Minderdichtigkeit der Außenummantelung durch Wassereintritt, beispielsweise durch Regen oder Kondensation von Luftfeuchtigkeit, die Gesamt-Dämmungsgüte vermindert wird. Ebenfalls bevorzugt ist es, die erste Dämmschicht aus Schaumglas und die zweite Dämmschicht aus Mineralwolle auszuführen, was Kostenvorteile bietet, aber dennoch den gesicherten Effekt der Verhinderung der unzulässigen Aufheizung des Produktfluids durch die elektrische Heizung bei gleichzeitiger Verhinderung unzulässiger Abkühlung durch niedrige Außentemperatur bietet. Ein gewisser Nachteil könnte ein möglicherweise verminderter Aufheizschutz bei nasser zweite Dämmschicht im Fall hoher Umgebungstemperaturen und ohne Kühleinrichtung sein, was sich aber durch gelegentliche Inspektionen auffangen ließe.

Erfindungsgemäß soll sich die Wahl der Schichtdicken der ersten und zweiten Dämmschicht nicht in erster Line an den nach dem Stand der Technik üblichen Kriterien einer ,wirtschaftlichen' Dämmdicke orientieren, sondern in der Hauptsache den produktspezifischen Anforderungen genügen. Die Schichtdicke der ersten Dämmschicht und der zweiten Dämmschicht kann unterschiedlich oder gleich sein. Bei einer bevorzugten Variante weisen die erste Dämmschicht und die zweite Dämmschicht die gleiche Schichtdicke auf, da rein durch die Geometrie bedingt die auf die Länge bezogene Außenoberfläche der zweiten Dämmschicht wesentlich grösser ist als diejenige der ersten Dämmschicht und somit die von der elektrischen Beheizung abgegebene Wärmeleistung bevorzugt nach außen abgegeben wird, d.h. dorthin, wo die kühlende Umgebung ist, so dass die Möglichkeit der Überhitzung des Produktfluids selbst bei geringer Strömungsgeschwindigkeit praktisch ausgeschlossen ist. Weiterhin wird so die Gesamtdicke der Dämmung klein gehalten, was für die Rohrleitungsverlegung und den Platzbedarf von Vorteil ist.

Beispielhafte Modellrechnungen für die in solchen Anwendungen technisch relevanten Rohrleitungsdurchmesser mit Nennweiten von 50 mm = 2 Zoll, 80 mm = 3 Zoll, 100 mm = 4 Zoll und 150 mm = 6 Zoll haben gezeigt, dass es besonders bevorzugt ist, die erste Dämmschicht 20 bis 40 mm, mehr bevorzugt 25 bis 35 mm, beispielsweise 30 mm dick zu gestalten, da hiermit unabhängig von der Dicke der äußeren Dämmung in relevanten Zeitspannen (typisch 24 Stunden, da bei längerem Strömungsstillstand entweder eine zu kontrollierende und zu beseitigende Störung vorliegt oder bei planmässiger Aktion der Leitungsstrang zu entleeren ist) praktisch keine relevante Aufheizung des Produktfluids eintreten kann. Im Falle der nach dem Stand der Technik direkt auf dem Rohr aufgebrachte elektrischen Beheizung mit Dämmung nur nach außen, wird innerhalb der betrachteten 24 Stunden regelmäßig eine unzulässige Aufheizung des Produktmediums eintreten

Der Wärmestrom, der durch die erste Dämmschicht in Richtung des Fluids übertragen wird und der Wärmestrom, der durch die zweite Dämmschicht in Richtung der Umgebung übertragen wird, ist abhängig vom Material und der Dicke der jeweiligen Dämmschicht und weiterhin auch von der Temperaturdifferenz zwischen dem Mittel zur Temperierung und dem Fluid beziehungsweise dem Mittel zur Temperierung und der Umgebung. Abhängig von dem an das Fluid beziehungsweise die Umgebung zu übertragenden Wärmestrom kann die Dicke oder auch das Material der ersten Dämmschicht und der zweiten Dämmschicht gewählt werden. Wenn ein möglichst großer Wärmestrom an das Fluid übertragen werden soll, ist es vorteilhaft, die erste Dämmschicht mit einer geringeren Schichtdicke auszuführen als die zweite Dämmschicht und/oder ein Material für die erste Dämmschicht zu wählen, das eine bessere Wärmeleitfähigkeit aufweist als das Material der zweiten Dämmschicht. Entsprechend ist es vorteilhaft, wenn nur ein kleiner Wärmestrom an das Fluid übertragen werden soll, die erste Dämmschicht in einer größeren Schichtdicke auszuführen als die zweite Dämmschicht und/oder für die zweite Dämmschicht ein Material zu wählen, das eine bessere Wärmeleitfähigkeit aufweist als das Material der ersten Dämmschicht.

Besonders bevorzugt ist es jedoch, wenn die erste Dämmschicht und die zweite Dämmschicht den gleichen Wärmewiderstand aufweisen. Dies bedeutet, dass die Wärmeleitfähigkeit und die Schichtdicke der ersten und der zweiten Dämmschicht gleich sind. Dies wird insbesondere dadurch erreicht, dass das Material der ersten Dämmschicht und der zweiten Dämmschicht das gleiche ist. Insbesondere bei Rohrleitungen ist aufgrund der nach außen zunehmenden Oberfläche der rotationssymmetrischen, zylindrischen Geometrie für den Wärmedurchgang der Wärmefluss nach außen immer merklich bevorzugt gegenüber dem nach innen, insbesondere für die am meisten relevanten Rohrleitungs(nenn)durchmesser 50 mm = 2 Zoll bis 100 mm = 4 Zoll.

Um die zweite Dämmschicht zu schützen und zu vermeiden, dass die zweite Dämmschicht insbesondere durch Witterungseinflüsse beschädigt oder von (Regen-)Wasser durchdrungen wird, ist es möglich und empfehlenswert, auf die zweite Dämmschicht eine Abdeckung aufzubringen. Eine solche Abdeckung ist zum Beispiel eine Hülle aus einem Metall, insbesondere aus verzinktem oder lackiertem Blech oder Aluminium oder aber auch aus Edelstahl. Die Materialauswahl folgt typisch den bekannten Empfehlungen und Vorgaben für das jeweilige Produktmedium aber insbesondere den gegebenen Anforderungen der Anlagensicherheit für die Installation.

Ausführungsbeispiele der Erfindung sind in den Figuren dargestellt und werden in der nachfolgenden Beschreibung näher erläutert.

Es zeigen:
- Figur 1: einen Querschnitt durch eine Rohrleitung mit der erfindungsgemäßen Vorrichtung zur Temperierung von Fluiden;
- Figur 2: einen Temperaturverlauf durch die Vorrichtung zur Temperierung von Fluiden mit einer Umgebungstemperatur unterhalb der Temperatur des Fluids;
- Figur 3: einen Temperaturverlauf durch die Vorrichtung zur Temperierung von Fluiden mit einer Umgebungstemperatur oberhalb der Temperatur des Fluids;
- Figur 4: einen Temperaturverlauf durch die Vorrichtung zur Temperierung von Fluiden mit einer Umgebungstemperatur unterhalb der Temperatur des Fluids, wobei die Heizleistung so geregelt ist, dass die Mittel zur Temperierung die gleiche Temperatur aufweisen wie das Fluid.

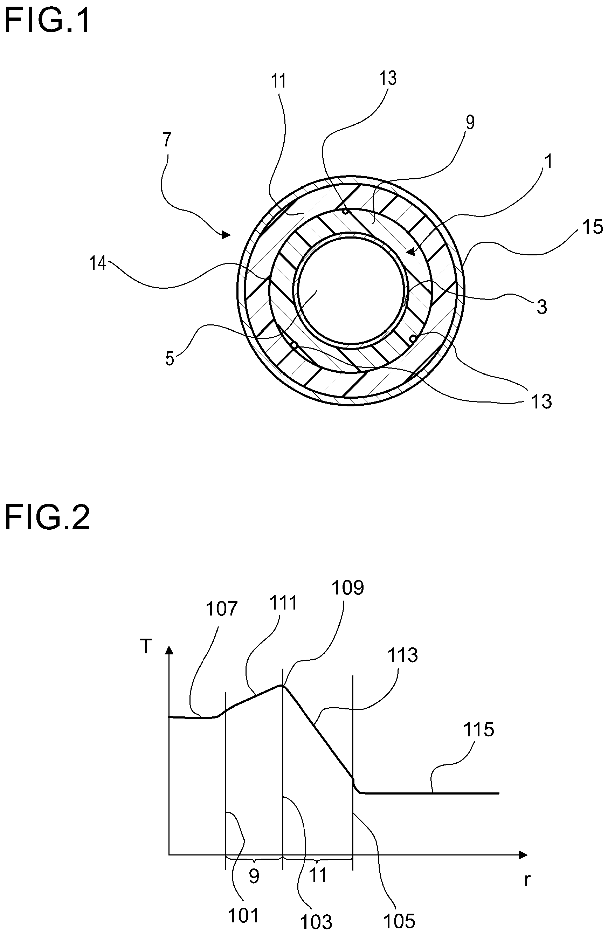

Figur 1 zeigt einen Querschnitt durch eine Rohrleitung mit einer erfindungsgemäßen Vorrichtung zur Temperierung von Fluiden.

Eine Rohrleitung 1 umfasst eine Wandung 3, die einen Innenraum 5, der von einem Fluid durchströmt werden kann, umschließt. Die Wandung 3 ist dabei gleichzeitig die Wandung der Vorrichtung zur Temperierung von Fluiden 7, die auf einer Seite mit dem Fluid in Kontakt steht und auf der auf der dem Fluid abgewandten Seite eine erste Dämmschicht 9 aufgebracht ist. Die erste Dämmschicht 9 ist von einer zweiten Dämmschicht 11 umschlossen.

Erfindungsgemäß sind zwischen der ersten Dämmschicht 9 und der zweiten Dämmschicht 11 Mittel zur Temperierung 13 angeordnet. Bevorzugt befindet sich weiterhin zwischen der ersten Dämmschicht 9 und der zweiten Dämmschicht 11 eine der besseren Wärmestromverteilung und Temperaturvergleichmäßigung am Umfang dienende Zwischenschicht 14, wobei es sich bei der Zwischenschicht 14 vorzugsweise um eine dünne metallische Schicht handelt, auf dem die Mittel zur Temperierung befestigt sind. Die Zwischenschicht 14 ist z.B. aus Aluminium mit einer Dicke von 0,2 bis 1 mm, vorzugsweise 0,3 bis 0,5 mm, und für eine vorteilhafte Montage in zwei Schalen/Hälften ausgeführt. Die Mittel zur Temperierung 13 können, wie hier dargestellt elektrische Heizleiter sein. In diesem Fall dienen die Mittel zur Temperierung 13 zur Beheizung und es ist nur möglich, einem Fluid, das durch die Rohrleitung 1 strömt, Wärme zuzuführen. Aufgrund der Positionierung der Mittel zur Temperierung 13 wird in diesem Fall gleichzeitig auch oder durchaus bevorzugt oder sogar fast ausschließlich Wärme nach außen an die Umgebung abgegeben, wodurch vermieden wird, dass an der Wandung 3 der Rohrleitung lokale Überhitzungen auftreten können und auch dass das Produktmedium nennenswert erhitzt oder gar überhitzt werden kann.

Neben den hier dargestellten elektrischen Heizleitern können die Mittel zur Temperierung 13 auch von einem Heizmedium oder Kühlmedium durchströmte Rohrleitungen oder Kanäle mit beliebigem Querschnitt sein oder auch Heizelemente oder Kühlelemente mit einer beliebigen anderen Form, beispielsweise als flächige Elemente, die auf der ersten Dämmschicht 9 aufgebracht werden. Wenn die Heizelemente oder Kühlelemente eine beliebige Form aufweisen, werden insbesondere elektrische Heizelemente oder Kühlelemente genutzt.

Wenn elektrische Heizleiter oder Rohrleitungen oder Kanäle als Mittel zur Temperierung 13 genutzt werden, können diese parallel zur zentralen Achse der Rohrleitung 1 verlaufen oder die Rohrleitung 1 umlaufen, zum Beispiel in Form einer Spirale. Auch ist es möglich, dass die Mittel zur Temperierung 13 mäandernd auf der ersten Dämmschicht 9 aufgebracht sind. Dies ist insbesondere bei Einsatz von elektrischen Heizleitern möglich, da diese über die gesamte Länge eine konstante Heizleistung abgeben. Typischerweise und bevorzugt ist aus Gründen der Zugänglichkeit für Montagen eine linienförmige Anordnung parallel zur zentralen Achse der Rohrleitung, wobei der Heizleiter bei Einsatz nur eines Heizleiters vorzugsweise etwas abseits der Mitte an der Unterseite (5 bis 6 oder 6 bis 7 Uhr Position), die Heizleiter bei Einsatz von zwei Heizleitern vorzugsweise an den 7 bis 8 Uhr und 4 bis 5 Uhr Positionen, bei Einsatz von drei Heizleitern vorzugsweise an den 8 Uhr, 12 Uhr und 4 Uhr Positionen und bei Einsatz von vier Heizleitern vorzugsweise an den 7 bis 8 Uhr, 10 bis 11 Uhr, 1 bis 2 Uhr und 4 bis 5 Uhr Positionen angeordnet sind. Für eine vorteilhafte Ausführung des elektrischen Anschlusses ist eine geradzahlige Anzahl an Heizleitern besonders bevorzugt, da hierbei beide Enden des elektrischen Anschlusses eines linearen, einadrigen Heizleiters örtlich an einer gemeinsamen Anschlussstelle positionierbar sind.

Um das Material der zweiten Dämmschicht 11 zu schützen und insbesondere eine Alterung oder Schädigung des Materials der zweiten Dämmschicht 11 durch Witterungsbedingungen oder andere Umgebungseinflüsse zu verhindern, ist es besonders bevorzugt, wenn die zweite Dämmschicht von einem Mantel 15 umschlossen ist. Der Mantel 15 wird vorzugsweise aus einem Metall gefertigt, beispielsweise Edelstahl, Aluminium, Zink oder verzinktem bzw. lackiertem Stahl oder Aluminium. Alternativ zur Verwendung eines Metalls für den Mantel 15 ist es auch möglich, den Mantel 15 aus einem Polymermaterial zu fertigen. Bevorzugt ist jedoch die Verwendung eines Metalls.

Der sich durch die Vorrichtung zur Temperierung von Fluiden, zum Beispiel durch die in Figur 1 im Querschnitt dargestellte Rohrleitung, ergebende Temperaturverlauf ist für drei verschiedene Varianten in den Figuren 2 bis 4 dargestellt.

In den Figuren 2 bis 4 ist jeweils auf der Abszisse der Verlauf durch die Vorrichtung r vom Inneren der Vorrichtung zur Umgebung dargestellt und auf der Ordinate die Temperatur T. In allen drei Figuren ist mit einer senkrechten Linie 101 ist die Position der Innenseite der ersten Dämmschicht 9 dargestellt, eine zweite senkrechte Linie 103 bezeichnet die Position, an der die zweite Dämmschicht 11 auf der ersten Dämmschicht 9 aufliegt und eine dritte senkrechte Linie 105 die Außenseite der zweiten Dämmschicht 11. Die Wandung 3 der Rohrleitung oder eines Behälters und der Mantel 15 ist in den Figuren 2 bis 4 nicht umfasst, da aufgrund der geringen Dicke der Wandung 3 und des Mantels 15 sowie des üblicherweise eingesetzten gut wärmeleitenden Materials die Temperaturdifferenz zwischen der Innenseite und der Außenseite der Wandung 3 beziehungsweise des Mantels 15 in der Regel im Vergleich zu den Temperaturdifferenzen, die sich durch die Dämmschichten 9, 11 bilden, vernachlässigbar klein ist. Weiterhin wurde aufgrund der im Vergleich zur Temperaturleitung und Konvektion geringen Effekte der Einfluss der Wärmestrahlung nicht berücksichtigt. Den aus den Darstellungen der Temperaturen ablesbaren Temperaturgradienten können gleichwertig entsprechende Wärmeströme bzw. Widerstände der Wärmeübertragung zugeordnet werden.

Figur 2 zeigt einen Temperaturverlauf durch die Vorrichtung zur Temperierung von Fluiden mit einer Umgebungstemperatur unterhalb der Temperatur des Fluids.

Insbesondere bei einem gut durchmischten Fluid oder einer turbulent durchströmten Rohrleitung weist das Fluid im Inneren der Vorrichtung zur Temperierung eines Fluids eine im Wesentlichen konstante Fluidtemperatur 107 auf.

Aufgrund von Wärmeleitung und Konvektion nimmt die Temperatur an der Wandung 3 der Rohrleitung oder des Behälters zu, wenn, wie in Figur 2 dargestellt, die Temperatur 109 der Mittel zur Temperierung 13 höher ist als die Fluidtemperatur 107. Aufgrund der Wärmeleitung durch die erste Dämmschicht 9 nimmt die Temperatur von außen nach innen, das heißt von den Mitteln zur Temperierung in Richtung der Wandung 3 der Rohrleitung oder des Behälters ab, so dass sich in der ersten Dämmschicht 9 der in Figur 2 gezeigte linear ansteigende Temperaturverlauf 111 vom Fluid in Richtung der Mittel zur Temperierung 13 ergibt. Da auch ein Wärmetransport durch die zweite Dämmschicht 11 erfolgt, nimmt hier die Temperatur entsprechend dem dargestellten Temperaturverlauf 113 von den Mitteln zur Temperierung 13 nach außen ab. An der Außenseite der zweiten Dämmschicht 11 beziehungsweise des hier nicht dargestellten Mantels 15 nimmt die Temperatur aufgrund von Wärmeleitungseffekten und Konvektion weiter ab, bis in einigem Abstand zur zweiten Dämmschicht 11 beziehungsweise dem Mantel 15 die Umgebungstemperatur 115 erreicht ist.

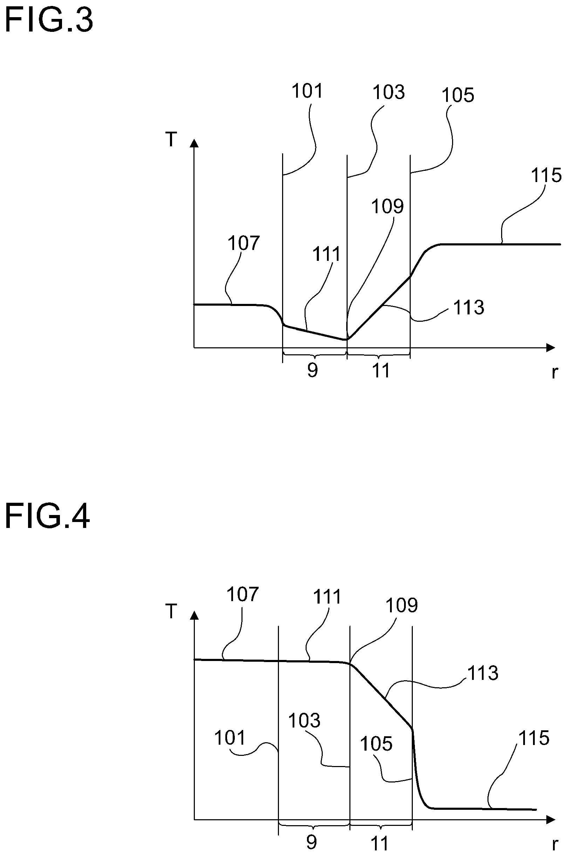

Im Unterschied zu dem in Figur 2 dargestellten Temperaturverlauf ist in Figur 3 ein Temperaturverlauf dargestellt, der sich ergibt, wenn die Fluidtemperatur 107 unterhalb der Umgebungstemperatur 115 liegt und als Mittel zur Temperierung 13 eine Kühleinrichtung vorgesehen ist. Damit die Mittel zur Temperierung 13 kühlen können, ist es notwendig, dass die Temperatur 109 der Mittel zur Temperierung 13 unterhalb der Fluidtemperatur 107 liegt. Aufgrund der niedrigen Temperatur 109 der Mittel zur Temperierung 13 nimmt die Temperatur des Fluids in der Nähe der Wandung aufgrund von Wärmeleitungseffekten und Konvektion ab und in der ersten Dämmschicht 9 ergibt sich ein linearer Temperaturverlauf 111, mit vom Inneren der Vorrichtung zur Temperierung in Richtung zu den Mitteln zur Temperierung 13 abnehmender Temperatur. Aufgrund der höheren Umgebungstemperatur 115 außerhalb der Vorrichtung zur Temperierung nimmt die Temperatur in der zweiten Dämmschicht von innen nach außen zur Umgebung hin mit einem linearen Temperaturverlauf 113 zu. An der Außenwandung ergibt sich wieder eine nicht lineare Temperaturzunahme von der Temperatur der Außenwand zur Umgebungstemperatur 115 aufgrund von Wärmeleitung und Konvektion in der Umgebungsluft.

Ein idealer Temperaturverlauf ist in Figur 4 dargestellt. Wie auch in Figur 2 ist hier die Umgebungstemperatur 115 niedriger als die Fluidtemperatur 107. Allerdings wird, im Unterschied zu dem in Figur 2 dargestellten Verlauf bei dem hier dargestellten Verlauf die Wärmemenge, die von den Mitteln zur Temperierung 13 zugeführt wird, so eingestellt, dass die Temperatur 109 der Mittel zur Temperierung 13 der Fluidtemperatur 107 entspricht. Aufgrund der gleichen Temperatur der Mittel zur Temperierung 13 und des Fluids ergibt sich eine konstante Temperatur vom Fluid durch die Wandung 3 und die erste Dämmschicht 9 bis hin zu den Mitteln zur Temperierung 13, die auch hier zwischen der ersten Dämmschicht 9 und der zweiten Dämmschicht 11 an der mit der Line 103 bezeichneten Position angeordnet sind.

Aufgrund der gleichen Temperatur 109 der Mittel zur Temperierung 13 und des Fluids wird nur eine geringe Menge in das Innere der Vorrichtung zur Temperierung des Fluids, zum Beispiel die Rohrleitung oder den Behälter, abgegeben. Ein weiterer Teil wird nach außen an die Umgebung abgegeben, so dass die Temperatur an der Außenwand höher ist als die Umgebungstemperatur 115. Die Wärme wird dann durch Wärmeleitung und Konvektion an die Umgebung abgegeben, so dass sich auch hier ein nichtlinearer Temperaturabfall von der Temperatur der Außenseite der zweiten Dämmschicht 11 oder des Mantels 15 auf die Umgebungstemperatur 115 ergibt.

Entsprechend dem hier für eine Umgebungstemperatur 115 unterhalb der Fluidtemperatur 107 liegenden Temperaturverlauf ist es auch dann, wenn die Umgebungstemperatur oberhalb der Fluidtemperatur liegt und die Mittel zur Temperierung auch eine Kühleinrichtung umfasst, besonders vorteilhaft, wenn von den Mitteln zur Temperierung so viel Wärme aufgenommen werden kann, dass die Temperatur der Mittel zur Temperierung gleich groß ist wie die Fluidtemperatur.

## Patentansprüche

1. Vorrichtung zur Temperierung von Fluiden, umfassend eine Wandung (3), eine erste Dämmschicht (9), Mittel zur Temperierung (13), und eine zweite Dämmschicht (11), wobei die Wandung (3) auf einer Seite mit dem zu temperierenden Fluid in Kontakt steht und die erste Dämmschicht (9) auf der dem Fluid abgewandten Seite der Wandung (3) aufgebracht ist und die Mittel zur Temperierung (13) zwischen der ersten Dämmschicht (9) und der zweiten Dämmschicht (11) angeordnet sind.

2. Vorrichtung gemäß Anspruch 1, **dadurch gekennzeichnet, dass** die Wandung (3) eine Wandung einer von dem Fluid durchströmten Rohrleitung (1) oder eines von dem Fluid durchströmten Kanals mit einer beliebigen Querschnittsform oder eine Wandung eines das Fluid enthaltenden Behälters ist.

3. Vorrichtung gemäß Anspruch 1 oder 2, **dadurch gekennzeichnet, dass** die Mittel zur Temperierung (13) mit einer vorgegebenen Heizleistung oder Kühlleistung betrieben werden können.

4. Vorrichtung gemäß einem der Ansprüche 1 bis 3, **dadurch gekennzeichnet, dass** die Mittel zur Temperierung (13) eine elektrische Beheizung umfassen.

5. Vorrichtung gemäß einem der Ansprüche 1 bis 4, **dadurch gekennzeichnet, dass** zwischen der ersten Dämmschicht (9) und der zweiten Dämmschicht (11) eine Zwischenschicht aus einem Metall mit einer Dicke im Bereich von 0,2 bis 1 mm aufgenommen ist.

6. Vorrichtung gemäß einem der Ansprüche 1 bis 5, **dadurch gekennzeichnet, dass** die Wandung (3) eine Wandung eines Kanals oder einer Rohrleitung (1) ist und die elektrische Beheizung mindestens einen Heizleiter umfasst, der parallel zur Strömungsrichtung des Fluids im Kanal oder in der Rohrleitung verläuft oder der um den Kanal oder die Rohrleitung (1) gewickelt ist, wobei vorzugsweise eine gerade Anzahl an Heizleitern umfasst ist.

7. Vorrichtung gemäß einem der Ansprüche 1 bis 6, **dadurch gekennzeichnet, dass** die Mittel zur Temperierung (13) eine Kühleinrichtung umfassen, wobei die Kühleinrichtung vorzugsweise mindestens eine Kühlleitung umfasst, die von einem Kühlmedium durchströmt wird.

8. Vorrichtung gemäß einem der Ansprüche 1 bis 7, **dadurch gekennzeichnet, dass** die erste Dämmschicht (9) und die zweite Dämmschicht (11) die gleiche Schichtdicke aufweisen.

9. Vorrichtung gemäß einem der Ansprüche 1 bis 8, **dadurch gekennzeichnet, dass** die erste Dämmschicht (9) eine Schichtdicke im Bereich von 20 bis 40 mm aufweist.

10. Vorrichtung gemäß einem der Ansprüche 1 bis 9, **dadurch gekennzeichnet, dass** die erste Dämmschicht (9) und die zweite Dämmschicht (11) den gleichen Wärmewiderstand aufweisen.

11. Verfahren zur Temperierung eines Fluids in einer Rohrleitung (1), einem Kanal mit beliebigen Querschnitt oder einem Behälter mit einer Vorrichtung (7) gemäß einem der Ansprüche 1 bis 10, wobei die Mittel zur Temperierung (13) so angesteuert werden, dass nur dann eine Heizleistung aufgebracht wird, wenn die Umgebungstemperatur (115) niedriger ist als eine zulässige minimale Temperatur des Fluids und/oder nur dann eine Kühlleistung, wenn die Umgebungstemperatur (115) höher ist als eine zulässige maximale Temperatur des Fluids.

12. Verfahren gemäß Anspruch 11, **dadurch gekennzeichnet, dass** die Heizleistung so eingestellt wird, dass die Mittel zur Temperierung (13) die gleiche Temperatur aufweisen wie das zu temperierende Fluid.

13. Verfahren gemäß Anspruch 11 oder 12, **dadurch gekennzeichnet, dass** die zulässige maximale Temperatur 0,5 bis 5 K unterhalb der Zersetzungstemperatur einer Komponente des Fluids oder der Starttemperatur der Polymerisation liegt und/oder die zulässige minimale Temperatur 0 bis 5 K oberhalb der Erstarrungstemperatur des Fluids liegt.

14. Verfahren gemäß einem der Ansprüche 11 bis 13, **dadurch gekennzeichnet, dass** das Fluid mit Hydrochinonmonomethylether zusammen mit gelöstem Sauerstoff oder mit Phenothiazin stabilisierte Acrylsäure oder Methacrylsäure ist.

15. Verfahren gemäß einem der Ansprüche 11 bis 14, **dadurch gekennzeichnet, dass** das Fluid ein fluidisierter Feststoff, eine Flüssigkeit, ein Gas oder eine beliebige Mischung daraus ist.

## Claims

1. An apparatus for controlling the temperature of fluids, comprising a wall (3), a first insulation layer (9), means of temperature control (13), and a second insulation layer (11), where the wall (3) is in contact on one side with the fluid of which the temperature is to be controlled and the first insulation layer (9) has been applied to the side of the wall (3) facing away from the fluid, and the means of temperature control (13) are disposed between the first insulation layer (9) and the second insulation layer (11).

2. The apparatus according to claim 1, wherein the wall (3) is a wall of a pipeline (1) through which the fluid flows or a duct of any cross-sectional shape through which the fluid flows or a wall of a vessel comprising the fluid.

3. The apparatus according to claim 1 or 2, wherein the means of temperature control (13) can be operated with a defined heating output or cooling output.

4. The apparatus according to any of claims 1 to 3, wherein the means of temperature control (13) comprise an electrical heater.

5. The apparatus according to any of claims 1 to 4, wherein an interlayer of a metal having a thickness in the range from 0.2 to 1 mm is accommodated between the first insulation layer (9) and the second insulation layer (11).

6. The apparatus according to any of claims 1 to 5, wherein the wall (3) is a wall of a duct or of a pipeline (1) and the electrical heater comprises at least one heat conductor which runs parallel to the flow direction of the fluid in the duct or in the pipeline or which is wound around the duct or the pipeline (1), preferably with inclusion of an even number of heat conductors.

7. The apparatus according to any of claims 1 to 6, wherein the means of temperature control (13) comprise a cooling device, where the cooling device preferably comprises at least one cooling conduit through which a cooling medium flows.

8. The apparatus according to any of claims 1 to 7, wherein the first insulation layer (9) and the second insulation layer (11) have the same layer thickness.

9. The apparatus according to any of claims 1 to 8, wherein the first insulation layer (9) has a layer thickness in the range from 20 to 40 mm.

10. The apparatus according to any of claims 1 to 9, wherein the first insulation layer (9) and the second insulation layer (11) have the same heat resistance.

11. A method of controlling the temperature of a fluid in a pipeline (1), a duct of any cross section or a vessel with an apparatus (7) according to any of claims 1 to 10, wherein the means of temperature control (13) are actuated such that a heating output is applied only when the ambient temperature (115) is lower than a minimum permissible temperature of the fluid and/or a cooling output is applied only when the ambient temperature (115) is higher than the maximum permissible temperature of the fluid.

12. The method according to claim 11, wherein the heating output is adjusted such that the means of temperature control (13) are at the same temperature as the fluid of which the temperature is to be controlled.

13. The method according to claim 11 or 12, wherein the maximum permissible temperature is 0.5 to 5 K below the breakdown temperature of a component of the fluid or the polymerization initiation temperature and/or the minimum permissible temperature is 0 to 5 K above the solidification temperature of the fluid.

14. The method according to any of claims 11 to 13, wherein the fluid is methacrylic acid or acrylic acid stabilized by hydroquinone monomethyl ether together with dissolved oxygen or with phenothiazine.

15. The method according to any of claims 11 to 14, wherein the fluid is a fluidized solid, a liquid, a gas or any mixture thereof.

## Revendications

1. Dispositif de thermorégulation de fluides comprenant une paroi (3), une première couche isolante (9), un moyen de thermorégulation (13), et une deuxième couche isolante (11), un côté de la paroi (3) étant en contact avec le fluide dont la température est à réguler et la première couche isolante (9) étant appliquée sur le côté de la paroi (3) qui est opposé au fluide et les moyens de thermorégulation (13) étant disposés entre la première couche isolante (9) et la deuxième couche isolante (11).

2. Dispositif selon la revendication 1, **caractérisé en ce que** la paroi (3) est une paroi d'un tuyau (1) traversé par le fluide ou d'un canal traversé par le fluide, ayant une section transversale de forme quelconque ou une paroi d'un récipient contenant le fluide.

3. Dispositif selon la revendication 1 ou 2, **caractérisé en ce que** les moyens de thermorégulation (13) peuvent fonctionner avec une puissance de chauffage ou de refroidissement spécifiée.

4. Dispositif selon l'une des revendications 1 à 3, **caractérisé en ce que** les moyens de thermorégulation (13) comprennent un chauffage électrique.

5. Dispositif selon l'une des revendications 1 à 4, **caractérisé en ce qu'**une couche intermédiaire constituée d'un métal ayant une épaisseur comprise entre 0,2 et 1 mm est incorporée entre la première couche isolante (9) et la deuxième couche isolante (11).

6. Dispositif selon l'une des revendications 1 à 5, **caractérisé en ce que** la paroi (3) est une paroi d'un canal ou d'un tuyau (1) et **en ce que** le chauffage électrique comprend au moins un conducteur de chauffage, qui est parallèle au sens d'écoulement du fluide dans le canal ou le tuyau ou qui est enroulé autour du canal ou du tuyau (1), comprenant de préférence un nombre pair de conducteurs de chauffage.

7. Dispositif selon l'une des revendications 1 à 6, **caractérisé en ce que** les moyens de thermorégulation (13) comprennent un dispositif de refroidissement, le dispositif de refroidissement comprenant de préférence au moins une conduite de refroidissement qui est traversée par un fluide de refroidissement.

8. Dispositif selon l'une des revendications 1 à 7, **caractérisé en ce que** la première couche isolante (9) et la deuxième couche isolante (11) présentent la même épaisseur de couche.

9. Dispositif selon l'une des revendications 1 à 8, **caractérisé en ce que** la première couche isolante (9) présente une épaisseur de couche comprise entre 20 et 40 mm.

10. Dispositif selon l'une des revendications 1 à 9, **caractérisé en ce que** la première couche isolante (9) et la deuxième couche isolante (11) présentent la même résistance thermique.

11. Procédé de thermorégulation d'un fluide dans un tuyau (1), dans un canal ayant une section transversale quelconque ou dans un récipient au moyen d'un dispositif (7) selon l'une des revendications 1 à 10, les moyens de thermorégulation (13) étant commandés de manière à ce qu'une puissance de chauffage ne soit appliquée que si la température ambiante (115) est inférieure à une température minimale admissible du fluide et/ou de manière à ce qu'une puissance de refroidissement ne soit appliquée que si la température ambiante (115) est supérieure à une température maximale admissible du fluide.

12. Procédé selon la revendication 11, **caractérisé en ce que** la puissance de chauffage est réglée de manière à ce que les moyens de thermorégulation (13) soient à la même température que le fluide dont la température est à réguler.

13. Procédé selon la revendication 11 ou 12, **caractérisé en ce que** la température maximale admissible est inférieure de 0,5 à 5 K à la température de décomposition d'un constituant du fluide ou à la température de démarrage de la polymérisation et/ou **en ce que** la température minimale admissible est supérieure de 0 à 5 K à la température de solidification du fluide.

14. Procédé selon l'une des revendications 11 à 13, **caractérisé en ce que** le fluide est de l'éther monométhylique d'hydroquinone en association avec de l'oxygène dissous ou de l'acide acrylique stabilisé par de la phénothiazine.

15. Procédé selon l'une des revendications 11 à 14, **caractérisé en ce que** le fluide est un solide, un liquide, un gaz ou tout mélange de ceux-ci.
